# EUROPEAN PATENT APPLICATION

(11) **EP 1 048 886 A1**
(43) Date of publication of application: **02.11.2000**
(21) Application number: 98948671.7
(22) Date of filing: 15.10.1998
(51) Int. Cl.: F16L 51/02, F16L 27/12

(54) **A CONTRACTIBLE JOINT DEVICE FOR METAL CONDUIT**

(30) Priority: 16.01.1998 CN 98230056; 21.04.1998 CN 98112442
(71) Applicant: Jin, Jiesheng, Zixing City, Hunan 423403 (CN); Zhou, Yushi, Zixing City, Hunan 423403 (CN); Liu, Yuefang, Zixing City, Hunan 423403 (CN); Luo, Chicheng, Zixing City, Huna 423403 (CN)
(72) Inventor: JIN, Jiesheng, Zixing City, Hunan 423403 (CN); ZHOU, Yushi, Zixing City, Hunan 423403 (CN); LIU, Yuefang, Zixing City, Hunan 423403 (CN); LUO, Chicheng, Zixing City, Hunan 423403 (CN); LI, Gengwu, Zixing City, Hunan 423403 (CN); PAN, Jiajing, Zixing City, Hunan 423403 (CN); LIAO, Zihan, Zixing City, Hunan 423403 (CN); LI, Xiaohong, Zixing City, Hunan 423403 (CN); LI, Xia, Zixing City, Hunan 423403 (CN); RUI, Youren, Zixing City, Hunan 423403 (CN); OU, Shamen, Zixing City, Hunan 423403 (CN); YANG, Jiyao, Zixing City, Hunan 423403 (CN); ZHAO, Xijin, Zixing City, Hunan 423403 (CN); LI, Zhu, Zixing City, Hunan 423403 (CN); LI, Xueqin, Zixing City, Hunan 423403 (CN); DENG, Jianmin, Zixing Ciy, Hunan 423403 (CN)
(74) Representative: Fry, Alan Valentine
(86) International application number: CN9800246
(87) International publication number: WO9936723

(57) **Abstract**

A contractible joint device for metal conduit (10), includes an inlet short pipe (1), a short outlet pipe (2) and a casing coupling (3). The opposite inner ends of the said two short pipes (1, 2) are placed in casing coupling (3) with a come-and-go clearance (6) between said inner ends. A corrugation pipe (7) is placed and can be axially moved back and forth by a force in said come-and-go clearance (6). The two ends of the said corrugation pipe (7) are connected respectively with the inner ends of the two short pipes to form a seal, and at least one of the ends of casing coupling (3) is free with relative to two short pipes (1, 2).

## Description

The present invention relates to an expansion joint device used for metal conduits, especially for connecting the ends of metal conduits when laying metal pipelines. More specifically, the present invention relates to an expansion joint device for use when connecting pressurised medium-conveying pipes, for example, for connecting the ends of steel pipes used in water-diversion pipelines of a hydropower station.

For metal conduits for conveying water, oil, gas or other mediums, especially those with relatively large diameters such as the steel pipes in the water-diversion pipelines of a hydropower station, the pipes can be extended or contracted by the effects of physical behaviour of the conveyed medium and changes in ambient temperature during the operation process Thermal stress induced thereby can cause the pressurised pipes to be damaged. Therefore, as the metal conduits are being laid, expansion joint devices need to be provided between the ends of neighbouring pipes as they are being connected.

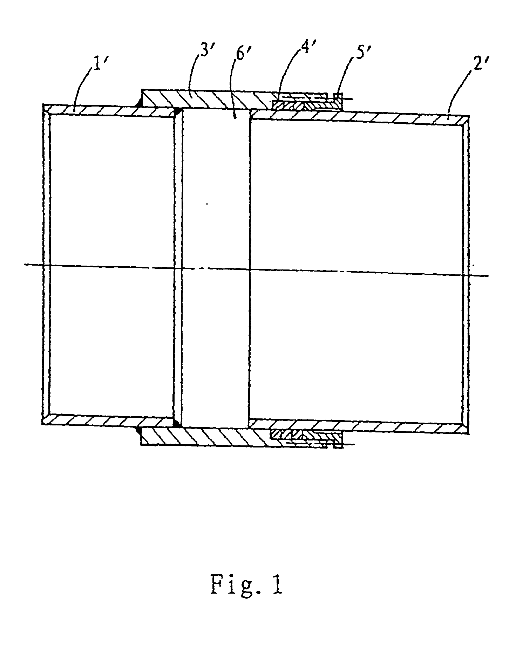

Figure 1 shows a known expansion joint device for metal conduits. The expansion joint device comprises two short tubes 1', 2' and a sleeve 3'. One end of the sleeve 3' is sealed and secured to the outer circumference of the short tube 1', and the other end of the sleeve 3' engages with the outer circumference of the short tube 2'. A sealing ring 4' is provided in the engaging portion of the sleeve and is fixed in position by a holding ring 5'. A compensating gap 6' is provided between the opposed ends of the two short tubes. As changes in the axial dimensions of the pipes occur due to thermal deformations, the opposed ends of the two short tubes can move axially towards one another to thereby relieve the thermal stresses. Such traditional sleeve-type expansion joints can have a relatively simple structure. The short tubes are, however, susceptible to radial distortion by the effects of the external forces applied during the fabrication and installation processes, and should this occur the sealing ring 4' is unlikely to operate satisfactorily to avoid leakage, especially in the case when highly pressurised medium is being conveyed. For this reason, in practical use, water-logging wells need to be prepared below the expansion joint device, and the water leaked into the wells needs to be periodically discharged. As a result, the running expenses are increased, and the possibility of a lack of safety always exists.

It is therefore an object of the present invention to provide an expansion joint device used for metal conduits which overcomes, or at least alleviates, the disadvantages discussed above.

It is another object of the present invention to provide an expansion joint device for use with metal conduits, which can avoid leakage from large-size diameter, highly pressurised metal conduits, and which has a stable and reliable working performance.

According to the first aspect of the present invention, there is provided an expansion joint device for metal conduits, comprising an inlet tube, an outlet tube and a sleeve, the opposed ends of said tubes being positioned within the sleeve and defining a compensating gap, characterised in that an axially extendable bellows is positioned in the compensating gap formed between the opposed ends of the two tubes with its ends respectively connected to the opposed ends of tubes in a sealed manner, at least one end of the sleeve being capable of relative movement with respect to the tube on which it is mounted.

Because the bellows in the compensating gap is capable of axially expanding or contracting due to external forces, and its two ends are sealed and connected with the inside ends of the two short tubes, the expansion joint device of the invention can accommodate the axial dimensional changes of the pipes caused by thermal deformations, to relieve the resulting thermal stresses, and effectively avoid leakages.

A trough of a node of the inside-oriented ripple in the bellows may be provided with a trough-mated core, and a gap may be formed between the surfaces of the trough and the trough-mated core, the gap enabling the node to be deformed without exceeding its elasticity limit.

An antiwear ring may be connected to the inside end of the inlet short tube. A gap may be formed between the other end of the antiwear ring and the inside end of the outlet short tube. A gap may also be formed between the outer wall surface of the antiwear ring and the crests of the nodes of the inside-oriented ripple in the bellows.

Because said trough-mated core is provided, the bellows can serve as an effective rigid support. With the aid of the antiwear ring, abrasion of inner wall surface of the bellows by the conveyed medium is effectively reduced. Accordingly, when being used in large-size and highly pressurised conveying pipelines, the expansion joint device can effectively protect the connecting portion of bellows itself with the inside ends of the short tubes from damage.

The above and other objects, features, and advantages of the present invention will appear more clearly to one skilled in the art by reading the following detailed description of preferred embodiments of the invention with reference to the accompanying drawings.
Figure 1 shows a sectional view of a known expansion joint device;
Figure 2 shows a sectional view of an expansion joint device in accordance with a fast embodiment of the invention;
Figure 3 shows a sectional view of a variation of the expansion joint device of Figure 2;
Figure 4 shows a sectional view of an expansion joint device in accordance with the second embodiment of the invention;
Figure 5 shows a partial enlarged sectional view of the trough-mated core in accordance with the embodiment of the expansion joint device shown in Figure 4;
Figure 6 shows a partial enlarged sectional view of the tough-mated core in accordance with another embodiment of the expansion joint device shown in Figure 4;
Figure 7 shows a sectional view of a variation of the expansion joint device of Figure 4.

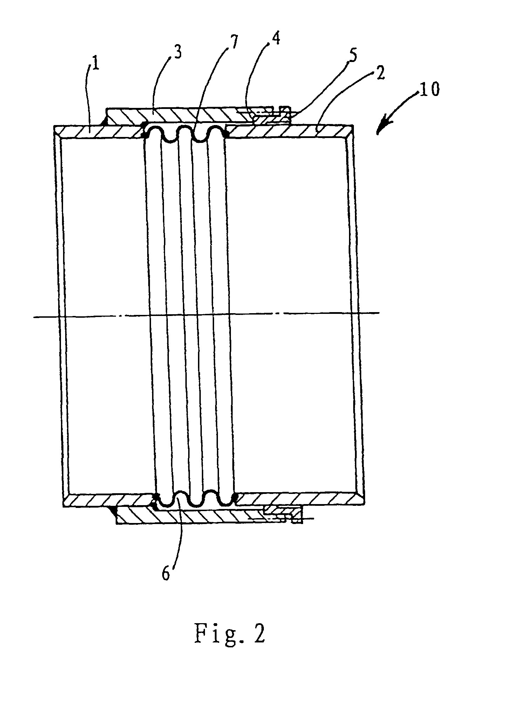

As shown in Figure 2 and in accordance with a first preferred embodiment of the present invention, an expansion joint device 10 comprises a substantially cylindrical inlet short tube 1, an outlet short tube 2 and a cylindrical unitary-type sleeve 3. The opposed ends of the short tubes 1, 2 are positioned within the sleeve 3. One end of the sleeve 3 is welded to the outer circumference of the short tube 1, and the other end of the sleeve engages and is axially movable along the outer circumference of the short tube 2. A bellows 7 is provided in a compensating gap 6 formed between the opposed ends of the two short tubes 1, 2, and the two ends of the bellows 7 are respectively connected to the ends of the two short tubes 1, 2 in a sealed manner. The bellows 7 has at least on sinusoidal or ripply node. Five such nodes are shown in Figure 2. Furthermore, each node in the embodiment has a circular profile, which can be alternated with other known profiles. The sleeve 3 has at one end a recessed section in which a holding ring 5 is placed. The holding ring 5 is fastened on the respective end portion of the sleeve 3 with bolts.

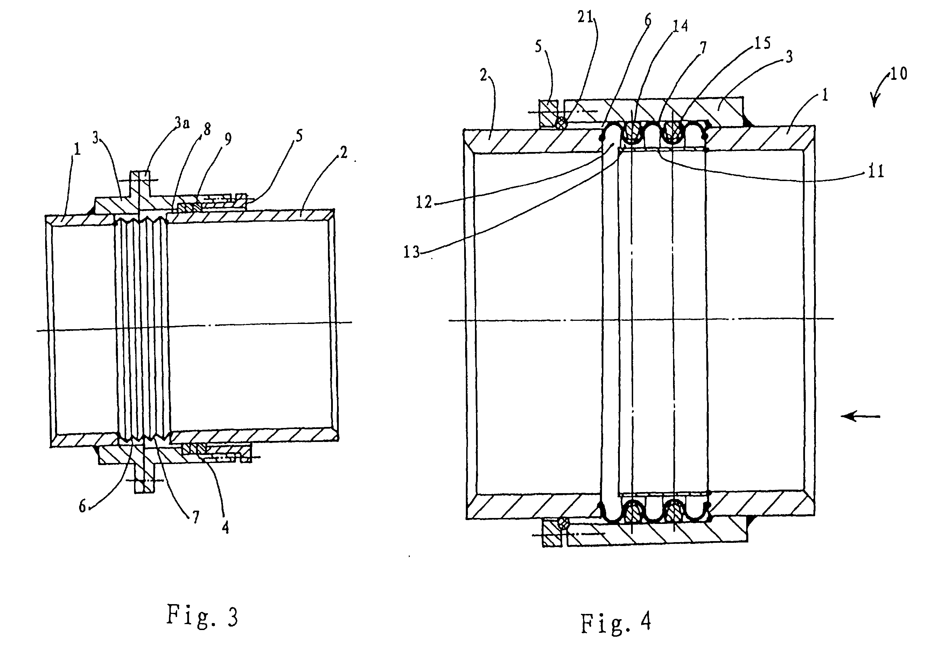

Figure 3 shows a variation of the expansion joint device 10 of Figure 2. In this embodiment the bellows 7 has a wrinkle-like configuration with the cross-section of each node having a hackle-like, preferably semicircle or crest-rounded profile. Additionally, of the sleeve 3 is formed of two separable sections. This being of benefit to the fabrication and installation of the expansion joint device. Furthermore, a clearance gap 8 is formed between the inner surface of the end 3a of the sleeve 3 and outer circumference of the short tube 2 and between the inner surface of the holding ring 5 and the outer surface of the short tube 2. This gap can accommodate a micro deformation that might be generated by non-uniform radial yielding the pipe. A sealing ring 9 is positioned between the inner surface of the sleeve end 3a and the outer surface of the short tube 2. The sealing ring 9 is located in a recess 4 formed in the end portion 3a of the sleeve 3 and is tightened by the holding ring 5. The holding ring 5 is fastened on the end portion 3a of the sleeve 3 with bolts.

The expansion joint device in accordance wit the embodiment of the invention illustrated in Figures 2 and 3 is useful for supporting the two short tubes 1, 2 and protecting the outside of the bellows 7. Also, the bellows 7 is designed to serve as a conveying pipe for the medium passing therethrough. The expansion joint device in accordance with this embodiment of the invention is preferably used for conveying low or normal pressurised medium.

Figure 4 illustrates an expansion joint device in accordance with a second embodiment of the invention. In this Figure, the same reference numbers have been used to indicate the same or similar members to those shown in Figures 2 and 3 of the drawings. The expansion joint device 10 comprises an inlet short tube 1, an outlet short tube 2, and a sleeve 3. The opposed ends of two short tubes 1, 2 are both positioned within the sleeve 3, and a bellows 7 produced from stainless steel is provided in a compensating gap 6 formed between the opposed ends of the two short tubes 1, 2. The ends of the bellows 7 are respectively connected with the ends of the two short tubes 1, 2 in a sealed manner and the crests of the nodes of the outside-oriented ripple of said bellows 7 contacts or tend to contact the inner wall surface of the sleeve 3. The size of the gap 6, the length of the bellows 7 and the number of the nodes are evaluated and determined according to the likely amount of axial deformation of the metal conduits. One end of the sleeve 3 is rigidly connected to the outer surface of short tube 1 by welding or other known means. The other end of the sleeve 3 is free and a holding ring 5 bolted thereon is provided. A sealing ring 21 is provided between the engaging surfaces of the holding ring 5 and the sleeve 3, and the inner surface of the sealing ring 21 contacts the outer wall surface of the short tube at the same side. Should axial deformation be generated in the metal conduit, the sleeve 3 of the short tube 1 exhibit axial displacements with respect to the short tube 2, and hence the bellows 7 is compressed and extended.

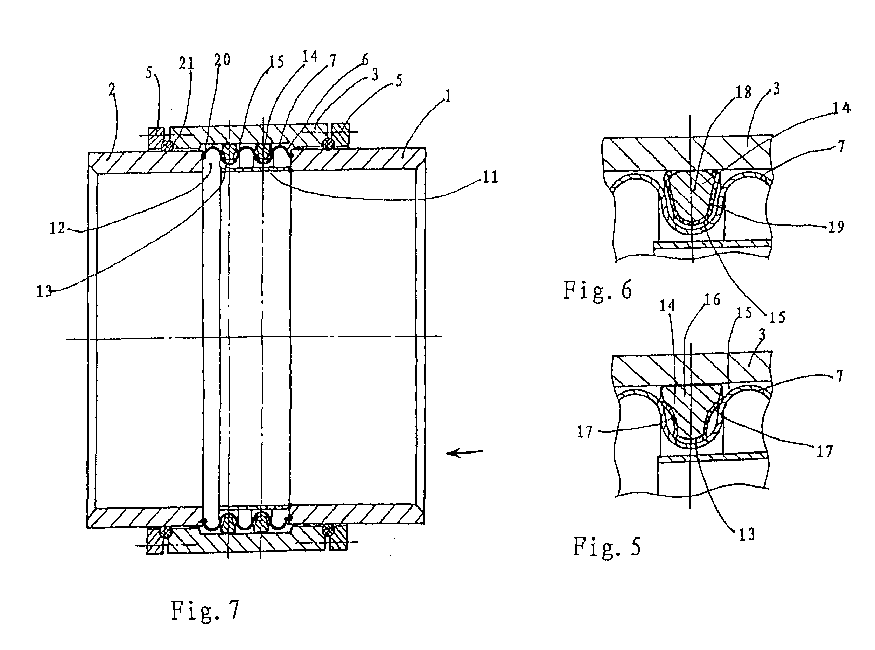

Referring to Figures 5 and 6, a trough in a node of the inside-oriented ripple in the bellows is provided with a trough-mated core 14, and a gap 15 is formed between the surfaces of the trough and the core 14. This gap 15 allows the bellows 7 to exhibit its deformation as being compressed or extended. The size of the gap 15 is determined according to the amount of deformation shared by the respective node and allows the node, as a radial force is applied on, to be supported by the core 14 within its elasticity deformation limit. The outer wall surface of the core 14 contacts or tends to contact the inner wall surface of the sleeve 3. The core 14 comprises a rigid body 16 and two elastic bodies 17 attached one to each side surface of the rigid body 16. When the elastic bodies 17 are compressed to some extent, the rigid body 16 of the core 14 supports the node. Figure 6 shows another type of core structure. This core 14 comprises a rigid body 18 and a flexible layer 19 laid on its surface. When the node 14 exhibits an inward deformation caused by an applied radial force, the flexible layer 19 is firstly compressed. When the flexible layer 19 is compressed to some extent, the rigid body 18 acts to support the node. The trough-mated core 14 may be formed in a configuration of multi-segments and then arranged circumferentially one by one.

Figures 4 and 7 show an antiwear ring 11 provided on the end surface of the inside of the short tube 1, i.e. the inlet tube, effectively to reduce the abrasion of the inner surface of the bellows 7 by the conveyed medium. The service life of the bellows 7 can thereby be lengthened and hence the service life of a shell-type bellows 7 can be in conformity with that of the metal conduits. A gap 12 is formed between one end of the antiwear ring 11 and the inside end of the short tube 2, i.e. the outlet tube, in order to accommodate axial expansion and contraction of the metal conduits. A gap 13 is formed between the outer wall surface of the antiwear ring 11 and the crest of the inside-oriented ripple in the bellows 7. The nodes of the bellows 7 are thereby allowed to be radially deformed in the gap when the bellows is compressed. In this embodiment, the crest of the outside-oriented ripple of the bellows 7 contacts the inner wall surface of said sleeve 3. When the bellows 7 is deformed due to a radial force applying on, the sleeve 3 can serve as a rigid support.

Therefore, the bellows 7, rigidly supported by the sleeve 3 and the trough-mated core 14, behaves like a quasi-rigid body against the applied radial forces. The stability of performance of the bellows 7 is therefore remarkably improved and the trouble of 'failure of stabilisation' for the shell-type bellows, caused by applying excessive radial force, is avoided. Hence, the reliability of operation of the bellows 7 is effectively assured. Besides, reducing the wall thickness of the bellows 7, for the purpose of weakening the effect of the stress on the bellows 7, is allowed. Because of the gap between the surface of the core 14 and the inner surface of the trough of the nodes of the inside-oriented crests, the bellows 7 can keep exhibiting its original expansibility as the metal conduits move axially. Therefore, the expansion joint device 10 of the present invention is reliable on its working performance.

Figure 7 shows a variation of the expansion joint device of Figure 4, in which the two ends of the sleeve 3 are both free ends, i.e. the two short tubes are both axially movable with respect to the sleeve 3 to accommodate axial expansions and contractions of the metal conduits. In accordance with the embodiment, the inner surface of said sleeve 3 is formed wit a recess portion 20. Both the crest of node of the outside-oriented ripple in the bellows 7 and the outer wall surface of the trough-mated core 14 contact the bottom surface of the recess portion 20. Thus the sleeve 3 with its two free ends is prevented from being excessively displaced axially. Further details in the embodiments are shown in the Figures.

The concepts and embodiments of the expansion joint device in accordance with the present invention have been described in detail with reference to the accompanying drawings. Additionally, further alternatives, which accord with the spirit and scope of the invention, are deemed to fall within the protective scope of the invention as defined in the appended claims. With regard to the bellows illustrated in the description of the invention, it is readily concluded that the node can have other types of profile form besides the semicircle, wrinkle-like, or crest-rounded profiles mentioned in the application. On this account, the profile form of the node is defined in the present application as having any types of curve linked between two points, except straight line.

## Claims

1. An expansion joint device (10) used for metal conduits, comprising an inlet tube (1), an outlet tube (2) and a sleeve (3), the opposed ends of said tubes (1, 2) being positioned within the sleeve (3) and defining a compensating gap (6), characterised in that an axially extendable bellows (7) is positioned in the compensating gap (6) formed between the opposed ends of the two tubes (1, 2), with its ends respectively connected to the opposed ends of tubes (1, 2) in a sealed manner, at least one end of the sleeve (3) being capable of relative movement with respect to the tube on which it is mounted.

2. An expansion joint device according to claim 1, characterised in that a trough of a node of the inside-oriented ripple in the bellows (7) is provided with a trough-mated core (14), and a gap (15) is formed between the surfaces of the tough and said trough-mated core (14), the gap (15) enabling the node to be deformed without exceeding its elasticity limit.

3. An expansion joint device (10) according to claim 2, characterised in that an antiwear ring (11) is connected to the inside end of the inlet tube (1), with a gap (12) formed between the other end of the antiwear ring (11) and the inside end of the outlet tube (2), and in that a gap (13) is formed between the outer wall surface of the antiwear ring (11) and the crest of the node of the inside-oriented ripple in the said bellows (7).

4. An expansion joint device (1) according to claim 2 or claim 3, characterised in that the trough-mated core (14) comprises a rigid body (16) and two elastic bodies (17) attached to the two side surfaces of the rigid body (16) respectively.

5. An expansion joint device (10) according to claim 2 or 3, characterised in that said trough-mated core (14) comprises a rigid body (18) and a flexible layer (19) laid on surface of the rigid body (18).

6. An expansion joint device (10) according to claim 1, 2 or 3, characterised in that the bellows (7) has at least one node.

7. An expansion joint device (10) according to any one of claims 1 to 3, characterised in that a holding ring (5) is connected to the free end of the sleeve (3), a fitting gap (8) is formed between the inner surface of the holding ring and the outer wall surface of the tube at the same side, to enable the short tube to be axially movable, and a sealing ring (21) is provided between the engaging surfaces of said holding ring and the free end of the sleeve, the inner surface of said sealing ring contacting the outer wall surface of the tube at the same side.

8. An expansion joint device (10) according to claim 2 or claim 3, characterised in that the outer wall surface of the trough-mated core (14) contacts or tends to contact the inner wall surface of the sleeve (3), and the crests of the nodes of the outside-oriented ripple in the bellows (7) contact or tend to contact the inner wall surface of said sleeve (3).

9. The expansion joint device (10) according to claim 2 or 3, characterised in that a recess portion (20) is formed in the inner surface of said sleeve (3), the crests of the nodes of the outside-oriented ripples in the bellows (7) contact or tend to contact the bottom surface of the recess portion (20), and the outer wall surface of the trough-mated core (14) contacts the bottom surface of the recess portion (20).

10. An expansion joint device (10) according to any of claims 1 to 3, characterised in that the cross-section of a node in the bellows (7) is curvilinear.
